# EUROPÄISCHE PATENTSCHRIFT

(11) **EP 0 735 602 B1**
(45) Veröffentlichungstag und Bekanntmachung des Hinweises auf die Patenterteilung: **30.08.2000**
(21) Anmeldenummer: 96105171.1
(22) Anmeldetag: 01.04.1996
(51) Int. Cl.: H01M 8/06

(54) **Wärmetauscher in Plattenbauweise mit Reformer**
Platelike heat exchanger with reformer
Echangeur de chaleur de forme plate avec réformeur

(30) Priorität: 30.03.1995 DE 19511817
(43) Veröffentlichungstag der Anmeldung: 02.10.1996
(73) Patentinhaber: AEG Energietechnik GmbH, 60528 Frankfurt (DE)
(72) Erfinder: Kriechbaum, Karl, Prof. Dr.-Ing., 34130 Kassel (DE)
(74) Vertreter: Dreiss, Fuhlendorf, Steimle & Becker

(56) Entgegenhaltungen:
- EP-A- 0 173 904
- EP-A- 0 378 812
- DE-A- 4 330 623
- GB-A- 2 025 118
- US-A- 4 788 110
- PATENT ABSTRACTS OF JAPAN vol. 013, no. 439 (E-827), 3.Oktober 1989 & JP-A-01 167958 (TOKYO GAS CO LTD), 3.Juli 1989,

## Beschreibung

Bei Hochtemperaturbrennstoffzellen (SOFC)-Anlagen sind die Aggregate, die erforderlich sind, um die SOFC-Stapel zu einer Anlage zu ergänzen, vergleichsweise aufwendig. Manche dieser Aggregate brauchen zu ihrem Betrieb eine Energiezufuhr von außen, was den Wirkungsgrad der Gesamtlage mindert.

Es sind Vorreformer bekannt geworden, bei denen die Prozeßwärme der Brennstoffzellenstapel für die Heizung des Reformers verwendet wird. Bei dieser Ausführung werden mit einem katalytischen Stoff gasdurchlässig gefüllte Rohre von dem heißen aus der Kathode strömenden Gas der Brennstoffzellen umströmt.

Nachteilig bei dieser Anordnung ist der Aufwand für die Rohre; denn um eine gute Wärmeeinbringung zu gewährleisten, darf der Durchmesser dieser Rohre nicht zu groß sein. Für ein bestimmtes durchzusetzendes Gasvolumen sind daher entsprechend viele Rohre mit einem vergleichsweise hohen Aufwand vorzusehen.

Es ist auch ein metallischer Plattenwärmetauscher bekannt (E. Achenbach, E. Riensche und G. Unverzagt: "Gas Processing of SOFC-Plants. European Solid Oxide Fuel Cell Forum", Oktober 3-7, 1994, Luzern/Schweiz), bei dem die Oberflächen der das Brenngas führenden Kanäle mit einem Katalysator, vorzugsweise Nickel, beschichtet sind. Diese Wärmetauscher haben wegen der kleinen Spalte einen guten Wärmeübergang von dem heizenden Gas, dem aus der Kathode austretenden Abgas, zu dem zu reformierenden Gas.

Nachteilig bei dieser Lösung sind die Kosten und die Tatsache, daß, die geschweißten Wärmetauscher zerschnitten werden müssen, um den Katalysator zu regenerieren .

Der Erfindung liegt die Aufgabe zugrunde, Reformer hinsichtlich der Art, wie ihr Energiebedarf gedeckt ist, und ihrer Kosten zu verbessern. Diese Aufgabe wird durch die im Kennzeichen des Anspruchs 1 aufgeführten Merkmale gelöst. Weiterbildungen der Erfindung sind in den Unteransprüchen enthalten.

Der Reformer, in dem das in der Brennstoffzelle benötigte Gas hergestellt wird, ist ein Aggregat, welches Energie verbraucht. Im Prinzip ist ein SOFC-Stapel in der Lage, Methan bei Anwesenheit von Wasserdampf in Kohlenmonoxid und Wasserstoff umzusetzen, zu reformieren. Diese chemische Reaktion ist endotherm, sie entzieht der Umgebung Wärme. Die Temperatur im Stapel sinkt, so daß die Leitfähigkeit des Elektrolyten für Sauerstoffionen abnimmt. Der Wirkungsgrad der Anlage nimmt ab. Andererseits ist zum mindesten eine Teilreformierung im Stapel erwünscht, um die mit der elektrochemischen Reaktion verbundene Temperaturerhöhung und damit die Kühlluftmenge zu begrenzen.

Erfindungsgemäß wird zur Reformierung in die Kanäle eines Wärmetauschers in Plattenbauweise, die für die Führung des Brenngas-Wasserdampfgemischs vorgesehen sind, ein schüttbarer Katalysator eingebracht, dessen Struktur einen kleinen Strömungswiderstand für das Gasgemisch hat. Dieser Katalysator kann beispielsweise aus einem Granulat mit einer Nickeloberfläche bestehen, vorzugsweise aus Körnern gleicher Größe.

Bei einem Nachlassen der katalytischen Wirkung des Granulats kann dieses in einfacher Weise gegen neues ausgetauscht werden. Um diesen Austausch zu erleichtern, besteht das Granulat in einer vorteilhaften Ausgestaltung der Erfindung aus kleinen Kugeln, die mit einem katalytisch wirkenden Stoff beschichtet sind.

Die Erfindung wird im folgenden anhand der Zeichnung näher erläutert.

Es zeigen:
- Fig. 1: einen Wärmetauscher in Plattenbauweise, der im Kreuzstrom von den beiden Medien durchflossen wird und
- Fig. 2: einen vergrößerten Aussschnitt eines Wärmetauscherkanals.

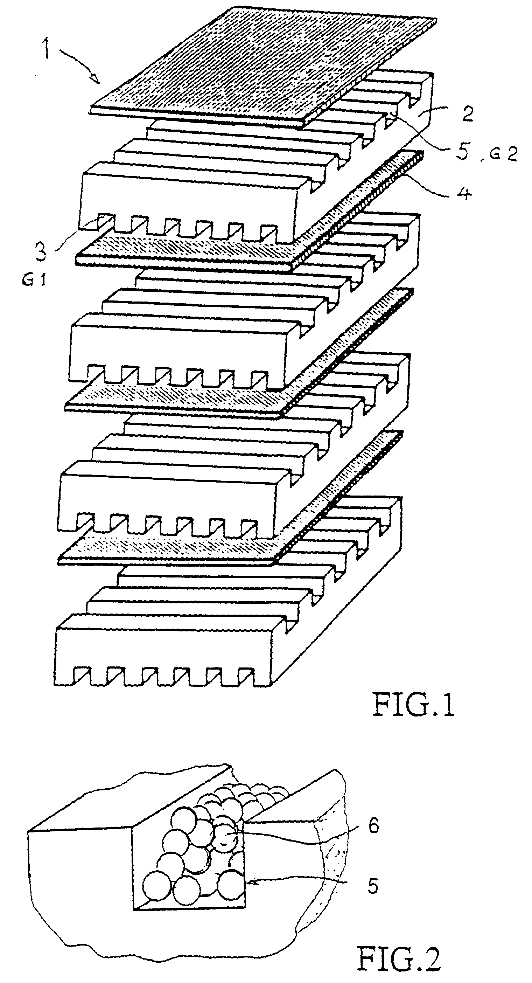

In Fig. 1 sind die vier Hauben zur Gasverteilung und -sammlung an den Stirnseiten des Wärmetauschers 1 nicht dargestellt. Die sich kreuzenden Gasströme fließen in Kanälen 3 und 5. Dazwischen befindet sich die Dichtung 4.

### Beispiel:

Das Medium G1 ist beispielsweise ein Methan-Wasserdampfgemisch für eine Brennstoffzellenanlage. Die Kanäle 5 des Wärmetauschers für dieses Medium werden mit einem katalytisch wirkenden Material gefüllt. Vorzugsweise wird dieses Material in die Kanäle 5 in Form eines Granulats 6 eingebracht (s. Fig. 2). Als Katalysator kommt vorzugsweise Nickel in betracht.

Die Kanäle 3 für das Medium G2, das die Wärme in den Wärmetauscher einträgt, sind durch Wände 4 von den Kanälen 5, die das Brenngas-Wasserdampfgemisch führen, getrennt. Die Wärmetauscherelemente bestehen vorzugsweise aus einem keramischen Werkstoff. Besonders für hohe Temperaturen über 1000 °C wird beispielsweise SiC verwendet.

## Patentansprüche

1. Wärmetauscher in Plattenbauweise mit Reformer mit zwei Arten von Kanälen (3, 5), wobei durch einen Kanal (3) jeweils ein Wärmeaustauschmedium (G1) strömt, während durch den anderen Kanal (5) ein zu reformierendes Gasgemisch (G2) strömt,
**dadurch gekennzeichnet,**
daß die Kanäle, die das zu reformierende Gasgemisch (G2) führen, mit einer katalytisch wirkenden Substanz beschickt sind.

2. Wärmeaustauscher nach Anspruch 1,
dadurch gekennzeichnet,
daß er ein Kreuzstrom-Wärmetauscher ist.

3. Wärmetauscher nach Anspruch 1,
dadurch gekennzeichnet,
daß der Wärmetauscher aus einem keramischen Werkstoff besteht.

4. Wärmetauscher nach Anspruch 1,
dadurch gekennzeichnet,
daß der Katalysator aus der Oberfläche auf einem Granulat (6) angebracht ist.

5. Wärmetauscher nach Anspruch 1,
dadurch gekennzeichnet,
daß das Granulat (6) aus kleinen Rohrabschnitten besteht.

6. Wärmetauscher nach Anspruch 1,
dadurch gekennzeichnet,
daß das Granulat (6) aus kleinen beschichteten Kugeln besteht.

7. Wärmetauscher nach einem oder mehreren der vorhergehenden Ansprüche,
dadurch gekennzeichnet,
daß die katalytisch wirkende Substanz aus Nickel besteht.

## Claims

1. A heat exchanger of plate structure with reformer with two kinds of passages (3, 5), wherein a respective heat exchange medium (G1) flows through a passage (3) while a gas mixture (G2) to be reformed flows through the other passage (5), characterised in that the passages which carry the gas mixture (G2) to be reformed are charged with a catalytically active substance.

2. A heat exchanger according to claim 1 characterised in that it is a cross-flow heat exchanger.

3. A heat exchanger according to claim 1 characterised in that the heat exchanger comprises a ceramic material.

4. A heat exchanger according to claim 1 characterised in that the catalyst is applied on the surface on a granular material (6).

5. A heat exchanger according to claim 1 characterised in that the granular material (6) comprises small tube portions.

6. A heat exchanger according to claim 1 characterised in that the granular material (6) comprises small coated balls.

7. A heat exchanger according to one or more of the preceding claims characterised in that the catalytically active substance comprises nickel.

## Revendications

1. Echangeur de chaleur de forme plate avec réformeur, comprenant deux types de canaux (3, 5), tandis qu'au travers d'un canal (3) s'écoule un milieu d'échange de chaleur (G1), tandis qu'au travers de l'autre canal (5) s'écoule un mélange de gaz (G2) de réformation, **caractérisé** en ce que le canal, au travers duquel s'écoule le mélange de gaz (G2) de réformation, est chargé d'une substance agissant comme catalyseur.

2. Echangeur de chaleur selon la revendication 1, caractérisé en ce qu'il est constitué d'un échange de chaleur à écoulement en croix.

3. Echangeur de chaleur selon la revendication 1, caractérisé en ce que l'échangeur de chaleur est constitué d'un matériau en céramique.

4. Echangeur de chaleur selon la revendication 1, caractérisé en ce que le catalyseur est appliqué sur la surface supérieure d'un granulat (6).

5. Echangeur de chaleur selon la revendication 1, caractérisé en ce que le granulat (6) est constitué de petites sections de tube.

6. Echangeur de chaleur selon la revendication 1, caractérisé en ce que le granulat (6) est constitué de petites sphères recouvertes.

7. Echangeur de chaleur selon l'une des revendications précédentes, caractérisé en ce que la substance agissant en tant que catalyseur est constituée de nickel.
